Europäisches Patentamt

European Patent Office

Office européen des brevets

(19)

(11) Veröffentlichungsnummer : **0 328 152 B1**

## (12) EUROPÄISCHE PATENTSCHRIFT

(45) Veröffentlichungstag der Patentschrift :
**29.07.92 Patentblatt 92/31**

(51) Int. Cl.$^5$ : **F25B 49/00**

(21) Anmeldenummer : **89102419.2**

(22) Anmeldetag : **13.02.89**

(54) **Verfahren zum Steuern des Betriebs eines Kühlaggregats.**

(30) Priorität : **11.02.88 DE 3804246**

(43) Veröffentlichungstag der Anmeldung :
**16.08.89 Patentblatt 89/33**

(45) Bekanntmachung des Hinweises auf die
Patenterteilung :
**29.07.92 Patentblatt 92/31**

(84) Benannte Vertragsstaaten :
**AT FR GB IT NL SE**

(56) Entgegenhaltungen :
**DE-A- 2 451 361
DE-A- 3 337 849
GB-A- 1 449 823
US-A- 4 507 932**

(73) Patentinhaber : **MEYER, Friedhelm
Hof Geisenberg 1 11 Alertshausen
W-5920 Bad Berleburg (DE)**

(72) Erfinder : **MEYER, Friedhelm
Hof Geisenberg 1 11 Alertshausen
W-5920 Bad Berleburg (DE)**

(74) Vertreter : **Klingseisen, Franz, Dipl.-Ing. et al
Dr. F. Zumstein Dipl.-Ing. F. Klingseisen
Bräuhausstrasse 4
W-8000 München 2 (DE)**

## Beschreibung

Die Erfindung betrifft ein Verfahren zum Steuern des Betriebs eines Kühlaggregats nach dem Oberbegriff des Anspruchs 1.

Aus DE-A-3 337 849 ist ein Kühlsystem für einen Verkaufsautomaten für gekühlte Ware bekannt, bei dem eine Waren-Fühlereinrichtung für die Ermittlung der Temperatur der gekühlten Ware und zum Einschalten des Verdampfergebläses vorgesehen ist, wenn eine Warentemperatur oberhalb einer vorbestimmten Grenztemperatur ermittelt wird, wobei die vorbestimmte Temperatur niedriger liegt als die zum Einschalten des Kompressors erforderliche Temperatur. Weiterhin ist eine Fühlereinrichtung für die Ermittlung der Temperatur der Verdampferschlange vorgesehen, durch die das Verdampfergebläse während des Kompressorzyklus und über das Ende dieses Zyklus hinaus eingeschaltet bleibt, wobei das Verdampfergebläse abgeschaltet wird, wenn die Temperatur der Verdampferschlange sich oberhalb des Gefrierpunktes des Wassers stabilisiert.

Der Erfindung liegt die Aufgabe zugrunde, ein Verfahren der eingangs angegebenen Art so auszubilden, daß eine Einsparung an Energieaufwand für den Kühlvorgang erreicht wird.

Diese Aufgabe wird durch die Merkmale im Kennzeichen des Anspruchs 1 gelöst. Dadurch, daß nach Abschalten des Kühlaggregats und des Ventilators letzterer wieder eingeschaltet wird, bevor die Einschalttemperatur des Kühlaggregats erreicht wird, kann die im Verdampfer noch vorhandene Restkälte , insbesondere einer im Verdampfer vorhandenen Eisbildung, in den Kühlraum geblasen werden, so daß ein Wiedereinschalten des Kühlaggregats hinausgeschoben und damit eine Energieeinsparung erreicht wird.

Vorteilhafte Ausgestaltungen der Erfindung sind in der folgenden Beschreibung und im Anspruch 2 angegeben.

Eine beispielsweise Ausführungsform der Erfindung wird nachfolgend anhand der Zeichnung näher erläutert. Es zeigen

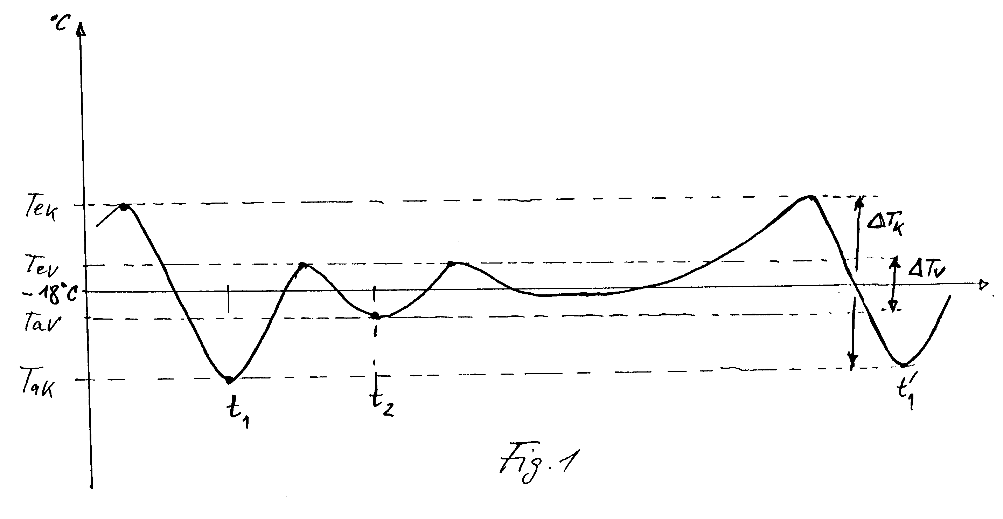

Fig. 1 in einem Diagramm den Temperaturverlauf zwischen Ein- und Ausschalttemperaturen von Kühlaggregat und Ventilator über der Zeit und

Fig. 2 ein Schaltbild einer Vorrichtung zur Durchführen des Verfahrens.

In einem Kühlraum wird beispielsweise eine Kühltemperatur von -18°C vorgegeben, die durch das Kühlaggregat aufrecht erhalten werden soll. Um diesen Sollwert von -18°C wird eine Temperaturdifferenz $\Delta T_K$ zwischen einer Einschalttemperatur $T_{eK}$ und einer Ausschalttemperatur $T_{aK}$ vorgegeben. Dabei kann die Einschalttemperatur $T_{eK}$ beispielsweise um 2°C über dem Sollwert und die Ausschalttemperatur $T_{aK}$ ebenfalls um 2°C unter dem Sollwert liegen. In Abhängigkeit von der Belastung des Kühlaggregats bzw. dem im Kühlraum vorhandenen Kühlgut wird mehr oder weniger häufig die Ein- und Ausschalttemperatur des Kühlaggregats erreicht, die durch einen im Kühlraum angeordneten Temperaturfühler ermittelt wird.

Jedesmal, wenn das Kühlaggregat ausgeschaltet wird, weil die Temperatur im Kühlraum die Ausschalttemperatur $T_{aK}$ erreich hat, wird auch der Ventilator ausgeschaltet, sofern er bis zu diesem Zeitpunkt eingeschaltet war, oder er bleibt ausgeschaltet, wenn der Ventilator vorher nicht eingeschaltet gewesen sein sollte. Das Ausschalten erfolgt zum Zeitpunkt $t_1$. Danach steigt die Temperatur im Kühlraum wieder über den Sollwert an. Bevor die Einschalttemperatur $T_{eK}$ des Kühlaggregats erreicht wird, wird eine Einschalttemperatur $T_{eV}$ für den Ventilator vorgegeben, die beispielsweise bei 0,5°C über dem Sollwert liegt, so daß bei Erreichen dieser Einschalttemperatur $T_{eV}$ der Ventilator unabhängig vom Kühlaggregat eingeschaltet wird. Da im Verdampfer eine gewisse Restkälte vorhanden ist, wird diese durch den Ventilator in den Kühlraum geblasen. Insbesondere wenn sich Eis im Verdampfer gebildet hat, aber ein Abtauvorgang noch nicht eingeleitet ist, wird durch den Ventilator Luft über das Eis geblasen und dabei abgekühlt. Die Temperatur im Kühlraum kann dadurch wieder abgesenkt werden, so daß das Erreichen der Einschalttemperatur $T_{eK}$ des Kühlaggregats hinausgeschoben wird.

Der Ventilator kann so lange eingeschaltet bleiben, bis die Einschalttemperatur $T_{eK}$ des Kühlaggregats und danach dessen Ausschalttemperatur $T_{aK}$ erreicht wird.

Bei dem Ausführungsbeispiel nach dem Diagramm wird eine Ausschalttemperatur $T_{aV}$ für den Ventilator bei beispielsweise 0,5°C unter dem Sollwert vorgegeben, so daß der Ventilator wieder ausgeschaltet wird, sobald diese Temperatur von -18,5°C erreicht ist. Dies erfolgt zum Zeitpunkt $t_2$.

Nachdem auch der Ventilator wieder ausgeschaltet ist, steigt die Temperatur im Kühlraum wieder an, wobei nach einer gewissen Zeit die Einschalttemperatur $T_{eV}$ für den Ventilator wieder erreicht und dieser eingeschaltet wird. Wenn beispielsweise im Verdampfer nicht mehr viel Restkälte und insbesondere auch keine nennenswerte Eisbildung mehr vorhanden ist, kann durch den Ventilator zwar die Temperatur im Kühlraum noch etwas abgesenkt werden, jedoch wird beispielsweise die Ausschalttemperatur $T_{aV}$ nicht mehr erreicht, so daß der Ventilator weiterläuft. Nach einer gewissen Zeit steigt die Temperatur im Kühlraum wieder an, bis die Einschalttemperatur $T_{eK}$ des Kühlaggregats erreicht und dieses eingeschaltet wird. Die Temperatur im Kühlraum wird danach abgesenkt, bis wieder die Ausschalttemperatur $T_{aK}$ erreicht und das Kühlaggregat mit dem Ventilator ausgeschaltet wird. Zu diesem Zeitpunkt $t'_1$ beginnt der beschriebene Vorgang erneut.

Die beschriebene Steuerung wird durch eine elektronische Steuereinrichtung vorgenommen, die mit einem Zeitgeber versehen und einem Temperaturfühler verbunden ist, der elektrische Signale entsprechend der festgestellten Temperatur abgibt.

Es ist offensichtlich, daß durch den Betrieb des Ventilators innerhalb der Temperaturdifferenz $\Delta T_K$ zwischen Ein- und Ausschalttemperatur $T_{eK}$ bzw. $T_{aK}$ des Kühlaggregats ein Hinausschieben des Wiedereinschaltens des Kühlaggregats und damit eine Einsparung an Energie erreicht wird. Insbesondere kann durch den Betrieb des Ventilators bei einer kleineren Temperaturdifferenz $\Delta T_V$ zwischen Ein- und Ausschalttemperatur $T_{eV}$ bzw. $T_{aV}$ innerhalb der größeren Temperaturdifferenz $\Delta T_K$ des Kühlaggregats ein Abtauen von Eis am Verdampfer ohne Einschalten der Abtauheizung erreicht werden, weil durch die vom Ventilator durch den Verdampfer geblasene Luft sich bildendes Eis wieder abgetaut wird. Dies gilt für Temperaturen, die im Bereich von 0°C liegen. Hierdurch ergibt sich eine weitere Energieeinsparung durch weniger häufiges Einschalten der Abtauheizung.

Bei dem beschriebenen Ausführungsbeispiel ist eine Temperaturdifferenz $\Delta T_K$ zwischen Ein- und Ausschalttemperatur des Kühlaggregats um den einzuhaltenden Sollwert vorgegeben. Es ist aber auch möglich, diese Temperaturdifferenz beispielsweise über den Sollwert zu legen, so daß die Ausschalttemperatur der Kälteanlage mit dem Sollwert zusammenfällt. Auch in einem solchen Falle kann die kleinere Temperaturdifferenz $\Delta T_V$ für den Ventilator innerhalb der größeren Temperaturdifferenz $\Delta T_K$ zwischen Ein- und Ausschalttemperatur der Kälteanlage vorgesehen werden.

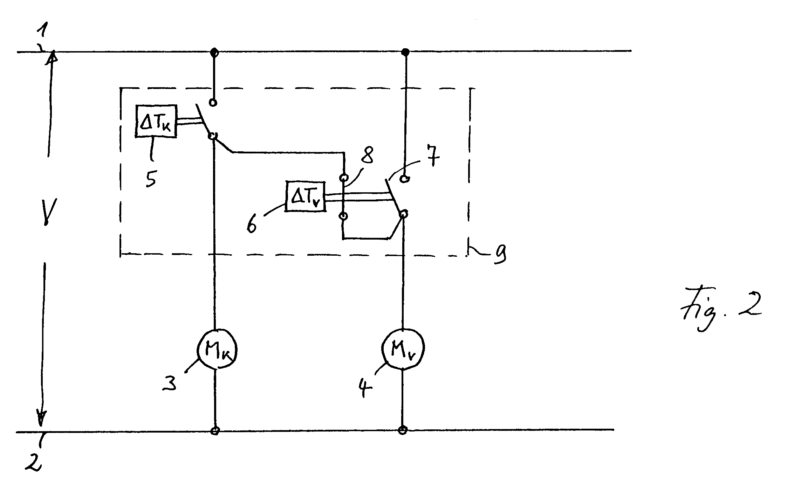

Fig. 2 zeigt ein Schaltbild einer Vorrichtung zur Durchführung des beschriebenen Verfahrens, wobei mit 1 und 2 Leitungen bezeichnet sind, zwischen denen eine Spannung V anliegt. Mit 3 ist der Motor der Kälteanlage und mit 4 der Motor des Ventilators bezeichnet. In der Versorgungsleitung des Motors 3 ist ein Thermostat 5 angeordnet, der auf die Temperaturdifferenz $\Delta T_K$ eingestellt ist und bei Erreichen der Einschalt-temperatur $T_{eK}$ die Kälteanlage einschaltet und bei Erreichen der Ausschalttemperatur $T_{aK}$ ausschaltet, wobei in Fig. 2 die Ausschaltstellung wiedergegeben ist. Ein weiterer Thermostat 6 mit einem ersten Schaltkontakt 7 und einem zweiten Schaltkontakt 8 liegt mit dem Schaltkontakt 7 in der Versorgungsleitung des Motors 4 für den Ventilator und mit dem Schaltkontakt 8 in einer Verbindungsleitung zwischen den beiden Versorgungsleitungen der beiden Motoren, wobei der Schaltkontakt 8 geschlossen ist, wenn der Schaltkontakt 7 offen ist und umgekehrt. Dieser Thermostat 6 ist auf die Temperaturdifferenz $\Delta T_V$ eingestellt, wobei er die dargestellte Schaltstellung einnimmt, wenn die Ausschalttemperatur $T_{aV}$ für den Ventilator erreicht ist. In diesem Schaltzustand ist der Schaltkontakt 8 geschlossen, so daß der Ventilator eingeschaltet wird, sobald die Kälteanlage durch den Thermostat 5 eingeschaltet wird.

Die beiden Thermostate 5,6 können in einem gemeinsamen Gehäuse 9 angeordnet werden, wie durch gestrichelte Linien angedeutet.

Die beschriebene Vorrichtung nach Fig. 2 kann beispielsweise in einem Haushaltskühlschrank in Verbindung mit einem kleinen Walzenventilator im Bereich des Verdampfers vorgesehen werden, um mit geringem Aufwand eine Energieeinsparung bei der in einem Haushaltskühlschrank vorgesehenen Abtauheizung zu erreichen. Die Vorrichtung nach Fig. 2 kann auch bei einer üblichen Kälteanlage vorgesehen werden, jedoch wird die Steuerung von Kälteanlage und Ventilator vorzugsweise in einer elektronischen Schalteinheit integriert, sofern eine solche für die Steuerung anderer Betriebszustände bei einer Kälteanlage vorhanden ist.

## Patentansprüche

1. Verfahren zum Steuern des Betriebs eines Kühlaggregats mit einem Verdampfer zum Kühlen eines Kühlraums und einem am Verdampfer vorgesehenen Ventilator, wobei der Ventilator unabhängig vom Kühlaggregat ein- und ausgeschaltet wird, das bei einer vorbestimmten, über einem Sollwert liegenden Einschalttemperatur des Kühlraums eingeschaltet und bei einer vorbestimmten, unter dem Sollwert liegenden Ausschalttemperatur des Kühlraums ausgeschaltet wird,
**dadurch gekennzeichnet ,**
daß bei einem Ausschaltvorgang des Kühlaggregats der Ventilator ebenfalls ausgeschaltet wird oder ausgeschaltet bleibt und wieder eingeschaltet wird, sobald der Kühlraum eine unter der Einschalttemperatur ($T_{eK}$) des Kühlaggregats liegende, vorbestimmte Einschalttemperatur ($T_{eV}$) des Ventilators erreicht.

2. Verfahren nach Anspruch 1,
**dadurch gekennzeichnet,**
daß innerhalb der Temperaturdifferenz ($\Delta T_K$) zwischen Ein- und Ausschalttemperatur ($T_{eK}$ bzw. $T_{ak}$) des Kühlaggregats eine kleinere Temperaturdifferenz ($\Delta T_V$) zwischen einer Ein- und Ausschalttemperatur ($T_{eV}$ bzw. $T_{aV}$) des Ventilators vorgegeben wird.

## Claims

1. Operation control method of a refrigeration unit comprising an evaporator for cooling a cooling chamber and a ventilating fan provided at the evaporator, wherein the ventilating fan is switched on and off independent from the refrigeration unit which is switched on at a predetermined switching on temperature of the cooling chamber, which temperature is above a target value, and is switched off at a predetermined switching off temperature of the cooling chamber, which temperature is below the target value,
**characterized in that**
in a switching off operation of the refrigeration unit the ventilating fan is switched off as well or remains switched off and is switched on again, as soon as the cooling chamber reaches a predetermined switching on temperature ($T_{ev}$) of the ventilating fan, which temperature is below the switching on temperature ($T_{ek}$) of the refrigeration unit.

2. A method according to claim 1,
**characterized in that**
inside the difference of temperature ($\Delta T_K$) between switching on and off temperature ($T_{eK}$ or $T_{aK}$ resp.) of the refrigeration unit there is preset a smaller difference of temperature ($\Delta T_V$) between a switching on and off temperature ($Te_V$ or $Ta_V$ resp.) of the ventilating fan.

## Revendications

1. Procédé pour la commande de fonctionnement d'un groupe frigorifique muni d'un évaporateur pour le refroidissement d'une chambre frigorifique et d'un ventilateur prévu sur l'évaporateur, le ventilateur étant commuté en marche et arrêt indépendamment du groupe frigorifique, lequel est mis en marche à une température de mise en marche prédéterminée située au-dessus d'une valeur nominale et qui est arrêté pour une température de mise en arrêt prédéterminée située au-dessous de la valeur nominale,
**caractérisé en ce que**
lors de la commutation de mise en arrêt du groupe frigorifique le ventilateur est également mis en arrêt ou demeure à l'état arrêté et il est remis en marche dès que la chambre frigorifique atteint une température de mise en marche prédéterminée ($T_{eV}$) du ventilateur, située eu-dessous de la température de mise en marche ($T_{eK}$) du groupe frigorifique,

2. Procédé selon la revendication 1,
**caractérisé en ce qu'**
à l'intérieur de l'écart de température ($\Delta T_K$) entre la température de mise en marche et d'arrêt ($T_{eK}$ ou $T_{aK}$) du groupe frigorifique il est alloué un écart de température plus faible ($\Delta T_V$) entre une température de mise en marche et d'arrêt ($T_{eV}$ ou $T_{aV}$) du ventilateur.

Fig.1

Fig. 2